(19) Europäisches Patentamt
European Patent Office
Office européen des brevets

(11) Publication number: **0 437 611 A1**

# (12) EUROPEAN PATENT APPLICATION published in accordance with Art. 158(3) EPC

(21) Application number: **89912140.4**

(22) Date of filing: **07.11.89**

(86) International application number:
**PCT/JP89/01142**

(87) International publication number:
**WO 91/00774 (24.01.91 91/03)**

(51) Int. Cl.[5]: **B01D 71/64**

(30) Priority: **06.07.89 JP 174930/89**

(43) Date of publication of application:
**24.07.91 Bulletin 91/30**

(84) Designated Contracting States:
**DE FR GB NL**

(71) Applicant: **MITSUBISHI KASEI CORPORATION**
**5-2, Marunouchi 2-chome Chiyoda-ku**
**Tokyo 100(JP)**

(72) Inventor: **KOBAYASHI, Yoshiteru 2-71-502,**
**Aoyama 1-chome**
**Yahata-Nishi-ku, Kitakyushu-shi**
**Fukuoka-ken 806(JP)**
Inventor: **KASAI, Tetsuo**
**7-3, Ogawa 2-chome Machida-shi**
**Tokyo 194(JP)**

(74) Representative: **Woods, Geoffrey Corlett et al**
**J.A. KEMP & CO. 14 South Square Gray's Inn**
**London WC1R 5EU(GB)**

## (54) SEPARATIVE MEMBRANE MADE OF AROMATIC POLYIMIDE.

(57) The invention relates to a separative membrane made of an aromatic polyimide, which is substantially constituted of a polyimide having the repeating units represented by general fomula (I) (wherein R represents a tetravalent aromatic group, and $R^1$ to $R^4$ each represents an organic group containing 1 to 12 carbon atoms), and a process for preparing said membrane which comprises dissolving the aromatic polyimide described above in an organic liquid, forming a membrane from the solution, and heating the formed membrane at 200 °C or above.

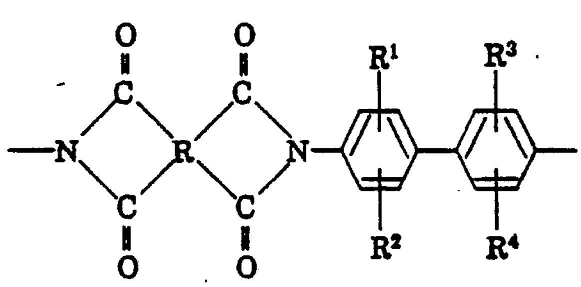

(I)

EP 0 437 611 A1

## (TECHNICAL FIELD)

The present invention relates to a separation membrane produced from a specific polyimide obtained by polymerizing an aromatic tetracarboxylic acid and a substituted biphenyl diamine, and a process for producing a separation membrane in which a film formed from a solution of the polyimide in an organic liquid is subjected to a heat treatment.

The aromatic polyimide separation membrane according to the present invention is excellent, in particular, in permeability of gas such as hydrogen, oxygen, carbon dioxide and water vapor as compared with membranes produced from conventional polyimide materials and, accordingly, it is useful as a gas separation membrane. In addition, since it is also excellent in organic solvent resistance, it can be utilized to dehydration and purification of organic liquids by means of pervaporation method and as porous filtration membranes used for precision filtration membranes or ultrafiltration membranes, etc., or reverse osmotic membranes.

(Background Art)

Conventional polyimide separation membranes are described in Japanese Patent Application Laid-Open (KOKAI Nos. 57-15819, 58-3603 and 58-8512 regarding a gas separation membrane produced from a polyimide obtained from a biphenyl tetracarboxylic acid and an aromatic diamine. However, although the selective separation efficiency of hydrogen against carbon monooxide is relatively high, the hydrogen permeation rate is not sufficient. On the other hand, Japanese Patent Publication No. 55-41802 discloses a polyimide gas separation membrane in which substituents are introduced to a rigid polyimide skeleton in order to hinder the free rotation around a main skeleton. However, a membrane having remarkably high gas permeability can not always be obtained by hindering the free rotation around the main skeleton.

Japanese Patent Application Laid-Open (KOKAI) Nos. 62-244419, 63-123420 and 63-105041 disclose gas separation membranes comprising an aromatic polyimide having poly-substituted biphenylene groups and copolymers thereof. However, in view of the selective gas permeability, physical property and production process, even these separation membranes are not always satisfactory in practical use.

(Disclosure of Invention)

The present invention relates to a separation membrane comprising an aromatic polyimide having rigid biphenyl groups having four organic groups with one or more of carbon atoms in the main molecular chain thereof, and a process for producing the aromatic polyimide separation membrane improved in selective separation efficiency by subjecting the aromatic polyimide to a heat treatment at a temperature not lower than 200°C and, preferably, not lower than the glass transition temperature (Tg) thereof.

That is, the feature of the present invention resides in an aromatic polyimide separation membrane consisting essentially of a polyimide having a repeating unit represented by the formula (I):

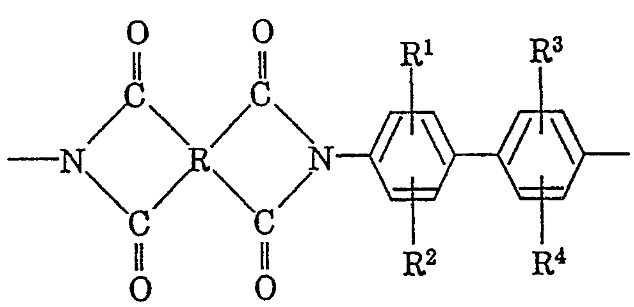

(I)

wherein R represents a tetravalent aromatic group and each of $R^1$ to $R^4$ represents an organic group with 1 to 12 carbon atoms, and

a process for producing a polyimide separation membrane in which the above-mentioned aromatic polyimide is dissolved into an organic solvent and then a film formed from the solution is subjected to a heat treatment at a temperature of not lower than 200°C.

The organic group represented by $R^1$ to $R^4$ can include, for example, alkyl group such as methyl, ethyl,

propyl, butyl, isopropyl, isobutyl and t-butyl; alkenyl group such as allyl, vinyl and butenyl; alkynyl group such as acetylenyl and 2-propynyl; cycloalkyl group such as cyclopropyl, cyclopentyl and cyclohexyl; aryl group such as phenyl and naphthyl; aralkyl group such as benzyl; alkoxy group such as methoxy, ethoxy and propoxy; aryloxy group such as phenoxy and naphthoxy; carboxyl group and metal salt thereof; acyl group such as acetyl and propionyl; acyloxy group such as acetoxy and propionyloxy; alkoxycarbonyl group such as carbomethoxy and carboethoxy. Preferably, alkyl group such as methyl, ethyl, propyl and butyl, in particular, methyl group can provide preferred result. $R^1$ to $R^4$ may be same or different with each other.

The polyimide having the repeating unit of the formula (I) is usually synthesized by synthesizing a polyamic acid by polycondensation of a tetracarboxylic acid dianhydride and a biphenylene diamine which is then subjected to chemical or thermal imide ring closure. However, any of known synthesis processes may be used so long as a polyimide having the repeating units of the formula (I) can be synthesized.

However, the method of obtaining the polyimide by thermal imide ring closure of the polyamic acid can not be said preferred since this generally renders the polyimide insoluble to usual organic solvents.

As the biphenylene diamine usable in synthesizing the polyimide used as the material of the separation membrane according to the present invention by using a biphenyldiamine, there can be mentioned, for example, 2,2'6,6'-tetramethylbenzidine, 3,3',5,5'-tetramethylbenzidine, 2,2',5,5'-tetramethylbenzidine, 2,2'3,3'-tetramethylbenzidine, 2,3',5,5'-tetramethylbenzidine, 2,2',6,6'-tetraethylbenzidine, 3,3',5,5'-tetraethylbenzidine, 5,5'-diethyl-3,3'-dimethylbenzidine, 3,3',5,5'-tetra-n-propylbenzidine, 2,2'-di-i-propyl-5,5'-dimethylbenzidine, 4,4'-diamino-5,5'-dimethyl-(1,1'-biphenyl)-3,3'-dicarboxylic acid, 3,3'-diphenyl-5,5'-dimethylbenzidine, 3,3'-diphenyl-5,5'-diethylbenzidine, 3,3',5,5'-tetramethoxybenzidine, 2,2',6,6'-tetraethoxybenzidine, 3,3'-phenoxy-5,5'-dimethylbenzidine, 3,3',5,5'-tetracyclohexylbenzidine, 3,3'-diallyl-5,5'-dimethylbenzidine and salts thereof. Copolymers obtained by using two or more of the diamine ingredients are of course included in the polyimide of the present invention. Among the diamine ingredients, 2,2',6,6'-tetramethylbenzidine and 3,3',5,5'-tetramethylbenzidine are preferred, 3,3',5,5'-tetramethylbenzidine being particularly preferred.

In the formula (I), R represents a tetravalent aromatic group and, specifically, there can be mentioned, for example,

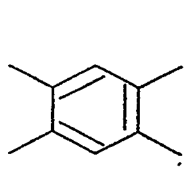 , 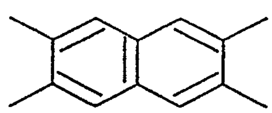 , 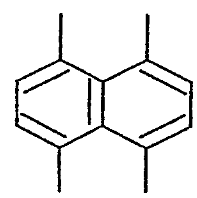 ,

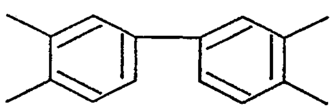 , 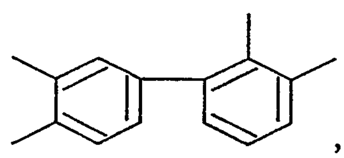 , 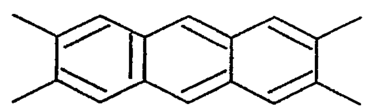

as well as their isomers and derivatives. Further, R also includes the tetravalent aromatic group represented by the formula (II):

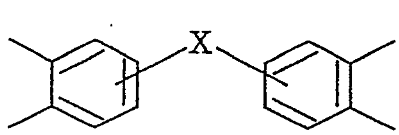 (II)

wherein X represents CO, $SO_2$, $C(CF_3)_2$, $Si(CH_3)_2$, $CH_2$, $C(CH_3)_2$ or O,

derivatives and isomers thereof, and nonbenzenoid aromatic group having a hetero ring such as:

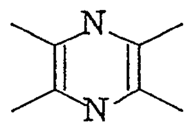 , 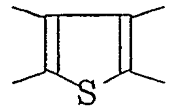

Further, imide copolymers having two or more of such aromatic groups are also included in the present invention.

Generally, the tetravalent aromatic group is introduced to the polyimide main molecular chain through the reaction of the corresponding tetracarboxylic acid dianhydride thereof and the diamine described above. As a portion of specific examples for such aromatic tetracarboxylic acid dianhydride, there can be mentioned, for example, pyromellitic acid dianhydride, 2,3,6,7-naphthalenetetracarboxylic acid dianhydride, 3,4,3',4'-diphenyltetracarboxylic acid dianhydride, 3,4,3',4'-benzophenonetetracarboxylic acid dianhydride, 3,4,3',4'-diphenylsulfontetracarboxylic acid dianhydride, 3,4,3',4'-diphenylhexafluoroisopropylidenetetracarboxylic acid dianhydride, 3,4,3',4'-diphenyl(trifluoromethyl) methanetetracarboxylic acid dianhydride, 1,4,5,8-naphthalenetetracarboxylic acid dianhydride, pyrazinetetracarboxylic acid dianhydride and 3,4,3',4'-diphenyldimethylmethanetetracarboxylic acid dianhydride.

The polyimide constituting the polyimide separation membrane according to the present invention may be a copolyimide containing diamine ingredients other than those described above so long as it contains at least not less than 40 mol/%, preferably, not less than 50 mol% of the repeating unit of the formula (I) or, in the case of the separation membrane obtained by subjecting the film formed from a solution of organic solvent to a heat treatment, at least not less than 70 mol% and, preferably, not less than 80 mol% of the repeating unit represented by the formula (I).

The aromatic polyimide separation membrane according to the present invention can be used as either a dense membrane or a porous membrane. In addition, it can be used also as an asymmetric membrane having a dense layer and a porous layer together. Further, it can be also used as a composite membrane of the polyimide and organic material including other polyimide or inorganic material or as a composite membrane comprising another porous membrane and the aromatic polyimide membrane according to the present invention. In this case, as a method of forming a thin aromatic polyimide membrane according to the present invention, there can be mentioned, for example, a method of spreading a solution of a polyamic acid or polyimide on the surface of water, a method of coating a solution of a polyamic acid or polyimide on a supporting substrate membrane, a method of polymerizing monomers such as a diamine and an aromatic tetracarboxylic acid dianhydride for synthesizing the aromatic polyimide after coating or immersing them to a supporting substrate membrane or a method of using interfacial polymerization, as well as any other known methods. Further, referring to the shape of the separation film, it can be a flat film or a hollow fibrous shape.

The dense membrane according to the present invention can be prepared by coating or casting a solution of the polyimide having the repeating unit of the formula (I), the polyamic acid having the repeating unit represented by the formula (III):

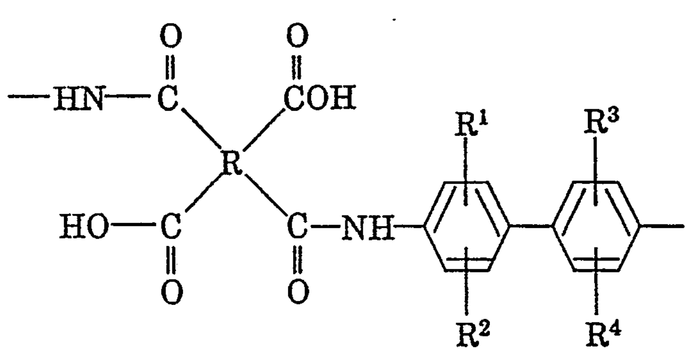 (III)

wherein R and $R^1$ to $R^4$ have the same meanings as those in the formula (I),

or a mixture of both of them in a polar solvent as a dope on a substrate with a flat surface, thereby

forming a thin film, then evaporating the solvent under an appropriate condition and, further, drying the same sufficiently.

Further, it can also be prepared by adding the polyimide having the repeating unit of the formula (I), or a substantial polyimide in which at least 65% of the amide linkages in a polyimide precursor (polyamic acid) having the repeating unit of the formula (III) is cyclized to imide linkages to an appropriate organic solvent, dissolving not less than 50% of the entire polymer added, forming a film from the resultant solution and, thereafter, subjecting to a heat treatment at a temperature of not lower than 200°C.

The latter method of dissolving into the organic solvent and applying the heat treatment after the formation of the film is particularly preferred since high gas permeability can be obtained.

The former method of obtaining a dense membrane by using a solution of a polyamic acid of the formula (III) in an organic polar solvent as the dope is shown more in detail. The polymer concentration in the dope depends on the molecular weight of the polyamic acid used, but, is usually from 2 to 40 % by weight. The dope is cast on a glass plate, teflon plate, stainless steel plate, steel plate, etc. having flat surface by using a doctor blade, etc. to form a thin film of about 1 to 40 mil at 0 to 100°C. Then, after gradually evaporizing to remove the solvent under a normal pressure or a reduced pressure, the temperature is gradually elevated to a temperature of not lower than 150°C, preferably, 200 to 400°C to conduct imidizing reaction and form a polymer having the repeating unit of the formula (I) and, at the same time, the solvent is thoroughly removed and the polymer is dried. Preferred result can be obtained in this case by setting the drying temperature to not higher than a level as not melting the polymer.

As the organic polar solvent for the polyamic acid solution, there can be mentioned, for example, N-methylpyrrolidone, N,N-dimethylformamide, N,N-dimethylacetamide, formamide, dimethylsulfoxide and tetramethylurea.

The latter method of obtaining a dense film by preparing an organic solvent thereby forming a film and, further, applying a heat treatment is explained more in detail.

A polyimide or a substantial polyimide in which at least 65%, preferably, not less than 75% of the amide linkages in the polyimide precursor is imidized, is added to an appropriate organic solvent, and at least 50% preferably, not less than 60% of the entire polymer added is dissolved and then a film is formed. There is no particular restriction for such organic solvent so long as it can dissolve the polyimide of the present invention at a polymer concentration of not less than 0.1%, preferably, not less than 1%. Generally, the organic polar solvent as described above is suitably used. After the film formation, a heat treatment is applied at a temperature not lower than 200°C, preferably, 300 to 500°C. The time for the heat treatment varies depending on the nature of the polyimide, thickness of the separation membrane to be produced and other heat treatment conditions and can not be defined generally. However, it is, usually, not less than 1 min and, preferably, 30 min to 48 hours, more preferably, 30 min to 24 hours. By such a heat treatment, selective separation efficiency of the separation membrane is improved. In particular, for the separation of small molecules such as hydrogen, this is extremely advantageous since the selective separation efficiency is improved by the heat treatment with no reduction in the permeability.

As the aromatic polyimide constituting the separation membrane, or the polyamic acid used for the production of the dense membrane in this invention, although depending on the membrane production conditions, those having a logarithmic viscosity of not less than 0.1 dl/g, preferably, from 0.3 to 5 dl/g at a polymer concentration of 0.5 g/dl in N-methylpyrrolidone as a solvent at 30°C are used.

The logarithmic viscosity is obtained in accordance with the formula as defined below:

$$\text{Logarithmic viscosity} = \frac{\text{Natural Logarithm (viscosity of the solution/viscosity of the solvent)}}{\text{Polymer concentration in the solution}}$$

The gas permeability coefficient P of the aromatic polyimide separation membrane according to the present invention as defined by the following equation:

$$P = \frac{\text{Gas permeation amount (cm}^3\cdot\text{STP) x membrane thickness (cm)}}{\text{Membrane area (cm}^2\text{) x time(sec) x pressure difference (cmHg)}}$$

is not less than 1000 cB (centi barrer), preferably, from 1000 to $10^6$ cB for hydrogen, not less than 100 cB,

preferably, from 100 to $10^5$ cB for oxygen and not less than 1000, preferably, from 1000 to $10^6$ cB for carbon dioxide.

(Best Mode for carrying Out the Invention)

The present invention is to be explained specifically referring to examples but the invention is not restricted to these examles unless not departing the gist thereof.

The gas permeability is represented by the gas permeability efficient P represented by the following formula:

$$P = \frac{\text{Gas permeation amount } (cm^3 \cdot STP) \times \text{membrane thickness (cm)}}{\text{Membrane area } (cm^2) \times \text{time (sec)} \times \text{pressure difference (cmHg)}}$$

wherein STP represents standard temperature and pressure.

The unit for P is indicated by cB (centi barrer)

$$cB = 10^{-12} \frac{cm^3 (STP) \cdot cm}{cm^3 \cdot sec \cdot cmHg}$$

The gas permeability is measured by using a gas permeation rate measuring device. This is a device in which a predetermined test gas is supplied at a constant pressure on one surface of a test membrane attached to a cell of the device and analyze the amount of the gas which permeates to the other side through the membrane by means of a pressure sensor or gas chromatography.

The selectivity of gas separation factor is represented as a ratio of permeability coefficient for the respective gases measured.

Example 1

Into a 300 ml four-necked flask equipped with a stirrer and a nitrogen inlet, 5.05 g (21 mmol) of 3,3',5,5'-tetramethylbenzidine (hereinafter simply referred to as TMBD) and 30 ml of N-methyl-2-pyrrolidone (hereinafter simply referred to as NMP) were added and dissolve in a nitrogen atmosphere at a room temperature. Then, 6.76 g (21 mmol) of benzophenonetetracarboxylic acid dianhydride (hereinafter simply referred to as BTDA) and 30 ml of NMP were added to the diamine solution.

Stirring was continued under room temperature for 10 hours to obtain a viscous solution of a polyimide precursor (polyamic acid) at a polymer concentration of 15% by weight. A portion of the solution was sampled and diluted with NMP to prepare a solution at a concentration of 0.5 g/dl. When the logarithmic viscosity was measured at 30°C, it was 1.0 dl/g.

Example 2

The polyamic acid solution prepared in Example 1 was cast on a glass plate with 18 mil knife gap and dried in an oven at 100°C for 1 hour in a nitrogen atmosphere. Then, after elevating temperature to 300°C and continuing drying for 1 hour, it was cooled gradually to obtain a dense membrane of 1 mil thickness. The results of the gas permeation test using the dense membrane at 30°C and 100°C are shown in Table 1.

Example 3

A polyamic acid solution was obtained in the same procedures as those in Example 1 except for using 3,3',4,4'-diphenylsulfonetetracarboxylic acid dianhydride (DSDA) as the acid anhydride. The logarithmic viscosity of the polymer measured in a solution of the polymer at a concentration of 0.5 g/dl in NMP at 30°C was 0.54 dl/g.

Example 4

A dense membrane of 1 mil thickness was obtained in the same procedures as those in Example 2 from the polyamic acid solution obtained in Example 3. The results of conducting the gas permeation test using the dense membrane at 30°C are shown in Table 1.

Example 5

Into the same 300 ml four-necked flask as in Example 1, 5.05 g (21 mmol) of TMBD and 34 ml of dimethylacetamide (hereinafter simply referred to as DMA) were added and dissolved in a nitrogen atmosphere at room temperature. Then, 6.18 g (21 mmol) of 3,3',4,4'-biphenyltetracarboxylic acid dianhydride (hereinafter simply referred to as BPDA) and 34 ml of DMA were added to the diamine solution.

After stirring at room temperature for 8 hours continuously, 22 ml of DMA was added and stirring was continued for further 30 hours to obtain a viscous polyamic acid solution at a polymer concentration of 10% by weight. The polymer in a solution at concentration of 0.5 g/dl in NMP at 30°C had a logarithmic viscosity of 0.80 dl/g.

Example 6

A dense membrane of 0.6 mil thickness was obtained in the same procedures as those in Example 2 from the polyamic acid solution obtained in Example 5. The results of a gas permeation test using the dense membrane at 30°C are shown in Table 1.

Example 7

A polyamic acid solution was obtained in the same procedures as those in Example 5 except for using pyromellitic acid dianhydride (hereinafter simply referred to as PMDA) as the acid anhydride. The polymer in a solution at a concentration of 0.5 g/dl in NMP at 30°C had a logarithmic viscosity of 2.2 dl/g.

Example 8

A dense membrane of 0.6 mil thickness was obtained in the same procedures as those in Example 2 from the polyamic acid solution obtained in Examle 7. The results of a gas permeation test using the dense membrane at 30°C are shown in Table 1.

Comparative Example 1

A polyamic acid solution was obtained in the same procedures as those in Example 1 except for using 3,3'-dimethylbenzidine (hereinafter simply referred to as OTD) instead of TMBD as the aromatic diamine. A dense membrane was obtained by the same procedures as those in Example 2 using the solution and the results of a gas permeation test at 30°C are shown in Table 1. It can be seen that the gas permeability coefficient is smaller in the aromatic polyamide using only di-substituted diamine other than tetra-substituted diamine used in the present invention.

Compartive Example 2

A polyamic acid solution was obtained in the same procedures as those in Example 7 except for using 4,4'-diaminodiphenyl ether instead of TMBD as the aromatic diamine. A dense membrane was obtained by the same procedures as those in Example 2 using the solution and the results of a gas permeation test at 30°C are shown in Table 1. The gas permeability of the aromatic polyimide membrane obtained was small in a case of using only the diamine not included in the diamine ingredient used in the present invention.

Table 1

| | Polyimide composition (mmol) | | | | | | | Gas permeability | | | | | | |
|---|---|---|---|---|---|---|---|---|---|---|---|---|---|---|
| | Acid dianhydride | | | | Diamine | | | Measured at (°C) | Permeability*1) coefficient (P) | | | Separation factor | | |
| | BTDA | DSDA | BPDA | PMDA | TMBD | ODA | OTD | | $H_2$ | $CO_2$ | $O_2$ *2) | $H_2/CH_4$ | $CO_2/CH_4$ | $O_2/N_2$ |
| Example 2 | 21 | - | - | - | 21 | - | - | 30 | 4690 | 1980 | 509 | 77 | 32 | 6.0 |
| | | | | | | | | 100 | 9600 | 2580 | 1130 | 44 | 12 | 4.0 |
| 4 | - | 21 | - | - | 21 | - | - | 30 | 5520 | 2290 | 780 | 75 | 31 | 4.9 |
| 6 | - | - | 21 | - | 21 | - | - | 30 | 6330 | 3340 | 1030 | 49 | 28 | 4.0 |
| 8 | - | - | - | 21 | 21 | - | - | 30 | 5960 | 3530 | 1120 | 54 | 34 | 3.7 |
| Comparative Example 1 | 21 | - | - | - | - | - | 21 | 30 | 183 | 21 | - | 968 | 160 | - |
| 2 | - | - | - | 20 | - | 21 | - | 30 | 564 | 212 | - | 154 | 58 | - |

*1 : Unit is expressed by cB (centibarrel)

*2 : Oxygen was measured using air as a test gas and other gases were measured by using respective pure gases

Example 9

A polyamic acid solution was obtained in the same procedures as those in Example 1 except for using 9.33 g (21 mmol) of 3,4,3',4'-diphenylhexafluoroisopropylidenetetracarboxylic acid dianhydride (hereinafter simply referred to as 6FDA) as the acid anhydride instead of BTDA. The polymer in a solution at a concentration of 0.5 g/dl in NMP at 30°C had a logarithmic viscosity of 1.45 dl/g.

In the same procedures as those in Example 2, a dense membrane of 1 mil thickness was obtained by using the polyamic acid solution and a gas permeation test was conducted at 30°C. The results are shown in Table 2.

Example 10

A polyamic acid solution was obtained in the same procedures as those in Example 9 except for using 5.05 g (21 mmol) of 2,2',6,6'-tetramethylbenzidine (hereinafter simply referred to as MTMB) instead of TMBD as the diamine ingredient. The polymer in a solution at a concentration of 0.5 g/dl in NMP at 30°C had a logarithmic viscosity of 1.36 dl/g.

In the same procedures as those in Example 2, a dense membrane of 1 mil thickness was obtained by using the polyamic acid solution and a gas permeation test was conducted at 30°C. The results are shown in Table 2.

Examples 11 and 12

Respective polyamic acid solutions were obtained in the same procedures as those in Example 10 except for using 6.18 g (21 mmol) of BPDA and 4.58 g (21 mmol) of PMDA as the acid anhydride ingredient. The polymers in solutions each at a concentration of 0.5 g/dl in NMP at 30°C had logarithmic viscosity of 1.38 dl/g and 1.69 dl/g. Results of the gas permeation test for the dense membrane obtained in the same procedures as those in Example 2 are shown in Table 2.

Example 13

Into the same 300 ml four-necked flask as in Example 1, 5.05 g (21 mmol) of TMBD and 30 ml of NMP were added and dissolved in a nitrogen atmosphere at room temperature. Then, 0.68 g (2.1 mmol) of BTDA and 15 ml of NMP were added and reacted under stirring for one hour. Further, 8.41 g (18.9 mmol) of 6FDA and 15 ml of NMP were added to the reaction mixture and, stirring was continued under room temperature for 30 hours.

A viscous polyamic acid solution at a polymer concentration of 17% by weight was obtained. The polymer in a solution at a concentration of 0.5 g/dl in NMP at 30°C had a logarithmic viscosity of 1.33 dl/g.

Example 14

A dense membrane of 1 mil thickness was obtained in the same procedures as those in Example 2 from the polyamic acid solution obtained in Example 13 and a gas permeation test was conducted at 30°C. The results are shown in Table 2.

Example 15

When a polyamic acid was synthesized in the same procedures as those in Example 13 except for using 2.03 g (6.3 mmol) of BTDA and 6.54 g (14.7 mmol) of 6FDA, a copolymer was obtained having a logarithmic viscosity of 1.53 dl/g as a solution at a concentration of 0.5 g/dl in NMP at 30°C. Using the polyamic acid solution, a dense membrane of 1 mil thickness was prepared by the same procedures as those in Example 2 and a gas permeation test at 30°C was conducted. Results are shown in Table 2.

Examples 16 to 18

When polyamic acids were synthesized in the same procedures as those in Example 13 except for using, instead of BTDA, 0.46 g (2.1 mmol), 0.92 g (4.2 mmol) and 2.29 g (10.5 mmol) of PMDA respectively and 8.41 g (18.9 mmol), 7.48 g (16.8 mmol) and 4.67 g (10.5 mmol) of 6FDA respectively, copolymers were obtained each having a logarithmic viscosity as a solution at a concentration of 0.5 g/dl in NMP at 30°C, of 1.48 dl/g, 1.53 dl/g and 1.57 dl/g respectively. Using the polyamic acid copolymers, dense membranes were prepared in the same procedures as those in Example 2 and a gas permeation test at 30°C was conducted. The results are shown in Table 2.

Table 2

| | Polyimide composition (mmol) | | | | | | Gas permeability | | | | | | |
|---|---|---|---|---|---|---|---|---|---|---|---|---|---|
| | Acid dianhydride | | | | Diamine | | Measured at (°C) | Permeability*1) coefficient (P) | | | Separation factor | | |
| | BTDA | BPDA | PMDA | 6FDA | TMBD | MTMB | | $H_2$ | $CO_2$ | $O_2$ *2) | $H_2/CH_4$ | $CO_2/CH_4$ | $O_2/N_2$ |
| Example 9 | - | - | - | 21 | 21 | - | 30 | 13400 | 8050 | 3080 | 60 | 36 | 4.25 |
| " 10 | - | - | - | 21 | - | 21 | 30 | 10600 | 5120 | - | 73 | 35 | - |
| " 11 | - | 21 | - | - | - | 21 | 30 | 4440 | 1860 | 456 | 75 | 32 | 5.3 |
| " 12 | - | - | 21 | - | - | 21 | 30 | 4870 | 1950 | - | 95 | 38 | - |
| " 14 | 2.1 | - | - | 18.9 | 21 | - | 30 | 12400 | 7200 | - | 62 | 36 | - |
| " 15 | 6.3 | - | - | 14.7 | 21 | - | 30 | 11100 | 6490 | - | 60 | 35 | - |
| " 16 | - | - | 2.1 | 18.9 | 21 | - | 30 | 12400 | 9620 | - | 51 | 39 | - |
| " 17 | - | - | 4.2 | 16.8 | 21 | - | 30 | 15000 | 10300 | - | 43 | 30 | - |
| " 18 | - | - | 10.5 | 10.5 | 21 | - | 30 | 12700 | 8200 | - | 49 | 32 | - |

*1 : Unit is expressed by cB (centibarrel)

*2 : Oxygen was measured using air as a test gas and other gases were measured by using respective pure gases

Reference Example 1

Into a 300 ml four-necked flask equipped with a stirrer and a nitrogen inlet, 5.08 g (21 mmol) of TMBD and 30 ml of NMP were added and dissolve in a nitrogen atmosphere at room temperature. Then, 9.33 g (21 mmol) of 6FDA and 30 ml of NMP were added to the diamine solution.

Stirring was continued under room temperature for 10 hours to obtrain a viscous solution of a polyimide precursor (polyamic acid) at a polymer concentration of 20% by weight. A portin of the solution was sampled and diluted with NMP to prepare a solution at a concentration of 0.5 g/dl. The logarithmic viscosity at 30°C was 1.57 dl/g.

Example 19

After adding 9 g (84 mmol) of acetic anhydride and 36 mml of NMP to the polyamic acid solution prepared in the same manner as in Reference Exmaple 1 and stirring for one hour, 9 g (84 mmol) of triethylamine was added and stirring was continued for 24 hours to obtain a polyimide solution. After coagulating the polyimide solution in a thread-like products in water and pulverizing them. They were washed with methanol and then dried under a reduced pressure to obtain a polyimide powder.

Example 20

The polyimide powder prepared in Example 17 was dissolved in NMP to prepare a 10 wt% solution. After filtering the solution by using a 5 µm milipore filter, it was cast on a glass plate using a doctor knife with 20 mil knife gap and dried in an oven under a nitrogen atmosphere at 80°C for 4 hours. Then, after elevating the temperature to 300°C and continuing drying for one hour, it was gradually cooled to obtain a dense membrane of 1 mil thickness. Using the dense membrane, permeation for pure gases was measured at 30°C. The results are shown below.

| | | | |
|---|---|---|---|
| $H_2$ | permeability coefficient | 22700 | cB |
| $CO_2$ | permeability coefficient | 22300 | cB |
| $CH_4$ | permeability coefficient | 860 | cB |
| $H_2/CH_4$ | separation factor | 26 | |
| $CO_2/CH_4$ | separation factor | 26 | |

Further, permeation of $CO_2$ gas/methane gas mixture (20% $CO_2$ gas) at 35°C was measured. The results are shown below.

| | | | |
|---|---|---|---|
| $CO_2$ | permeability coefficient | 18100 | cB |
| $CO_2/CH_4$ | separation factor | 26 | |

Example 21

The polyimide powder prepared in Example 19 was dissolved in NMP to prepare a 10 wt% solution. After filtering the solution by using a 5 µm milipore filter, it was cast on a glass plate using a doctor knife with a 20 mil knife gap and dried in an oven under a nitrogen atmosphere at 80°C for 4 hours, to obtain a self-supporting film. Then, the film was peeled off the glass plate and applied with a heat treatment at 120°C under a reduced pressure for 4 hours, to obtain a dense polyimide membrane of 1 mil thickness. The dense polyimide membrane was heated from room temperature to 250°C in an oven and, while being maintained at that temperatue, applied with a heat treatment for further one hour. Using the dense polyimide membrane permeation of pure gases at 30°C was measured. The results are shown below. It can be seen that the permeability coefficient is increased extremely by the heat treatment at a temperature not lower than 200°C.

| | | | |
|---|---|---|---|
| $H_2$ | permeability coefficient | 20700 | cB |
| $CO_2$ | permeability coefficient | 19700 | cB |
| $CH_4$ | permeability coefficient | 746 | cB |
| $H_2/CH_4$ | separation factor | 28 | |
| $CO_2/CH_4$ | separatin factor | 26 | |

Example 22

A dense polyimide membrane was obtained in the same procedures as those in Example 21 except for elevating temperature up to 350°C. Using the dense film, permeation of pure gases at 30°C was measured. The results are shown below.

| | | | |
|---|---|---|---|
| $H_2$ | permeability coefficient | 20000 | cB |
| $CO_2$ | permeability coefficient | 17500 | cB |
| $CH_4$ | permeability coefficient | 589 | cB |
| $H_2/CH_4$ | separation factor | 34 | |
| $CO_2/CH_4$ | separation factor | 30 | |

Example 23

A dense polyimide membrane was obtained in the same procedures as those in Example 21 except for elevating temperature up to 400°C. Using the dense film, permeation of pure gases at 30°C was measured. The results are shown below.

| | | | |
|---|---|---|---|
| $H_2$ | permeability coefficient | 21200 | cB |
| $CO_2$ | permeability coefficient | 14100 | cB |
| $CH_4$ | permeability coefficient | 303 | cB |
| $H_2/CH_4$ | separation factor | 70 | |
| $CO_2/CH_4$ | separation factor | 47 | |

Reference Example 2

A copolyimide was prepared using the procedures as stated in Example 4 of U.S. Patent No. 3708458, from a mixture comprising 3,3',4,4'-benzophenonetetracarboxylic acid dianhydride (hereinafter simply referred to as BTDA), 80 mol% of tolylene diisocyanate (mixture of about 80 mol% of 2,4-isomer and about 20 mol% of 2,6-isomer) and 20 mol% of 4,4'-diphenylmethane diisocyanate. N,N'-diomethylformamide was

used as a polymerizing solvent and the resin concentration was 21% by weight. A portion of the solution was sampled and diluted with NMP to prepare a solution at a concentration of 0.5 g/dl. The logarithmic viscosity at 30°C was 0.60 dl/g.

Comparative Example 3

After filtering the polyimide solution prepared in Reference Example 2 through 2 μm milipore filter, it was cast on a glass plate by using a doctor knife with 9 mil knife gap and dried in an oven under a nitrogen atmosphere at 100°C for one hour to obtain a self-supporting film. Then, the film was peeled off the glass plate, applied with a heat treatment at 120°C under a reduced pressure for 4 hours, further heated from room temperature up to 300°C in an oven and then, while being maintained at that temperature, applied with a heat treatment for further one hour. Using the dense polyimide membrane obtained, permeation of pure gases at 30°C was measured. The results are shown below.

| | | | |
|---|---|---|---|
| $H_2$ | permeability coefficient | 853 | cB |
| $CO_2$ | permeability coefficient | 145 | cB |
| $CH_4$ | permeability coefficient | 2.24 | cB |
| $H_2/CH_4$ | separation factor | 381 | |
| $CO_2/CH_4$ | separation factor | 65 | |

Further, permeation of air and $CO_2$/methane gas mixture (20% $CO_2$ gas) at 35°C was measured. The results are shown below.

| | | | |
|---|---|---|---|
| $O_2$ | permeability coefficient | 78.8 | cB |
| $O_2/N_2$ | separation factor | 8.24 | |
| $CO_2$ | permeability coefficient | 163 | cB |
| $CO_2/CH_4$ | separation factor | 74 | |

Comparative Example 4

A dense polyimide membrane was obtained in the same procedures as those in Comparative Example 4 except for elevating temperature up to 350°C. Using the dense membrane, permeation of pure gases at 30°C was measured. The results are shown below. It can be seen that the permeability coefficient is low in the case of using a polyimide not having the structure of the formula (I) according to the present invention even if it is soluble to organic solvent.

| | | | |
|---|---|---|---|
| $H_2$ | permeability coefficient | 1020 | cB |
| $CO_2$ | permeability coefficient | 210 | cB |
| $CH_4$ | permeability coefficient | 3.23 | cB |
| $H_2/CH_4$ | separation factor | 316 | |
| $CO_2/CH_4$ | separation factor | 64 | |

Reference Example 3

Into a 300 ml four-necked flask equipped with a stirrer and a nitrogen inlet, 5.08 g (21 mmol) of TMBD and 20 ml of NMP were added and dissolved in a nitrogen atmosphere at room temperature. Then, 1.35 g (4.2 mmol) of BTDA and 20 ml of NMP were added to the diamine solution, stirred for one hour and then 7.47 g (16.8 mmol) of 6FDA was added together with 20 ml of NMP.

Stirring was continued under room temperature for 10 hours to obtain a viscous solution of a polyimide precursor (polyamic acid) at a polymer concentration of 19% by weight. A portion of the solution was sampled and diluted with NMP to prepare a solution at a concentration of 0.5 g/dl. The logarithmic viscosity at 30°C was 1.44 dl/g.

Example 24

A polyimide powder was obtained from the polyamic acid solution prepared in Reference Example 3 in the same procedures as those in Example 19.

Example 25

The polyimide powder prepared in Example 24 was dissolved in NMP to prepare a 10 wt% solution. After filtering the solution through 5 μm milipore filter, it was cast on a glass plate using a doctor knife with 20 mil knife gap and dried in an oven under a nitrogen atmosphere at 80°C for 4 hours, to obtain a self-supporting film. Then, the film was peeled off the glass plate, applied with a heat treatment at 120°C under a reduced pressure for 4 hours. Then, it was further heated from room temperature up to 300°C in an oven and, while being maintained at that temperature, further applied with a heat treatment for one hour. Using the dense membrane obtained, permeation for pure gases was measured at 30°C. The results are shown below.

| | | | |
|---|---|---|---|
| $H_2$ | permeability coefficient | 22600 | cB |
| $CO_2$ | permeability coefficient | 19800 | cB |
| $CH_4$ | permeability coefficient | 759 | cB |
| $H_2/CH_4$ | separation factor | 30 | |
| $CO_2/CH_4$ | separation factor | 26 | |

Example 26

Using the polyimide powder prepared in Exmaple 24, a dense membrane of 1 mil thickness was obtained in the same procedures as those in Example 25 except for elevating the temperature up to 400°C. Using the dense membrane, permeation of pure gases at 30°C was measured. The results are shown

below.

| | | | |
|---|---|---|---|
| $H_2$ | permeability coefficient | 22700 | cB |
| $CO_2$ | permeability coefficient | 14600 | cB |
| $CH_4$ | permeability coefficient | 545 | cB |
| $H_2/CH_4$ | separation factor | 42 | |
| $CO_2/CH_4$ | separation factor | 27 | |

Reference Example 4

Into a 300 ml four-necked flask equipped with a stirrer and a nitrogen inlet, 5.08 g (21 mmol) of TMBD and 20 ml of NMP were added and dissolved in a nitrogen atmosphere at room temperature. Then, 0.92 g (4.2 mmol) of PMDA and 20 ml of NMP were added to the diamine solution, stirred for one hour and then 7.47 g (16.8 mmol) of 6FDA was added together with 20 ml of NMP.

Stirring was continued under room temperature for 10 hours to obtain a viscous solution of a polyimide precursor (polyamic acid) at a polymer concentration of 18% by weight. A portion of the solution was sampled and diluted with NMP to prepare a solution at a concentration of 0.5 g/dl. The logarithmic viscosity at 30°C was 1.53 dl/g.

Example 27

A polyimide powder was obtained from the polyamic acid solution obtained in Reference Example 4 in the same procedures as in Example 19.

Example 28

A dense membrane of 1 mil thickness was obtained by using the polyimide powder prepared in Example 27 in the same procedures as those in Example 25. Using the dense membrane, permeation for pure gases was measured at 30°C. The results are shown below.

| | | | |
|---|---|---|---|
| $H_2$ | permeability coefficient | 35500 | cB |
| $CO_2$ | permeability coefficient | 39400 | cB |
| $CH_4$ | permeability coefficient | 1750 | cB |
| $H_2/CH_4$ | separation factor | 20 | |
| $CO_2/CH_4$ | separation factor | 23 | |

Further, permeation of $CO_2$/methane gas mixture (20% $CO_2$ gas) at 35°C was measured. The results are shown below.

| | | | |
|---|---|---|---|
| $O_2$ | permeability coefficient | 5820 | cB |
| $O_2/N_2$ | separation factor | 3.75 | |
| $CO_2$ | permeability coefficient | 29100 | cB |
| $CO_2/CH_4$ | separation factor | 23 | |

Example 29

Using the polyimide powder prepared in Example 27, a dense membrane of 1 mil thickness was obtained in the same procedures as those in Example 25 except for elevating the temperature up to 400°C. Using the dense membrane, permeation of pure gases at 30°C was measured. The results are shown below.

| | | | |
|---|---|---|---|
| $H_2$ | permeability coefficient | 27200 | cB |
| $CO_2$ | permeability coefficient | 19000 | cB |
| $CH_4$ | permeability coefficient | 484 | cB |
| $H_2/CH_4$ | separation factor | 56 | |
| $CO_2/CH_4$ | separation factor | 39 | |

(Industrial Applicability)

Since the aromatic polyimide separation membrane according to the present invention has high heat stability and high mechanical strength, it can be used more effectively even in a severe circumstance under high temperature and high pressure, as compared with separation membranes obtained from other organic materials. For instance, it can be used as a separation membrane for separation of carbon dioxide in the third recovery of petroleum, separation of water vapor, helium, carbon dioxide, carbon disulfide, etc. from natural gases, as well as recovery of hydrogen in petroleum refining and ammonia synthesis plants, separation of carbon monoxide and hydrogen from synthesis gases and iron making gases, separation of oxygen or nitrogen from air for the production of oxygen-enriched air used for combustion and medical application or production of nitrogen as inert gas. Further, since the polyimide separation membrane obtained by the process according to the present invention is also excellent in organic solvent resistance, it can be used as a separation membrane upon treating waste water containing organic solvents by means of reverse osmosis, ultrafiltration or precision filtration. In addition, it is advantageously adopted as a separation membrane of organic liquid and water by means of pervaporation.

**Claims**

**1.** An aromatic polyimide separation membrane consisting essentially of a polyimide having a repeating unit represented by the formula (I):

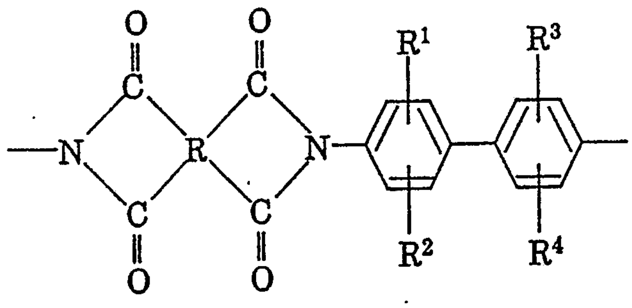

(I)

wherein R represents a tetravalent aromatic group and each of $R^1$ to $R^4$ represents an organic group with 1 to 12 carbon atoms.

2. An aromatic polyimide separation membrane as defined in claim 1, wherein each of $R^1$ to $R^4$ is an alkyl group with 1 to 12 carbon atoms.

3. An aromatic polyimide separation membrane as defined in claim 1, wherein each of $R^1$ to $R^4$ is a lower alkyl group with 1 to 3 carbon atoms.

4. An aromatic polyimide separation membrane as defined in claim 1, wherein each of $R^1$ to $R^4$ is a methyl group.

5. An aromatic polyimide separation membrane as defined in claim 1, wherein the repeating unit is represented by the formula (IV):

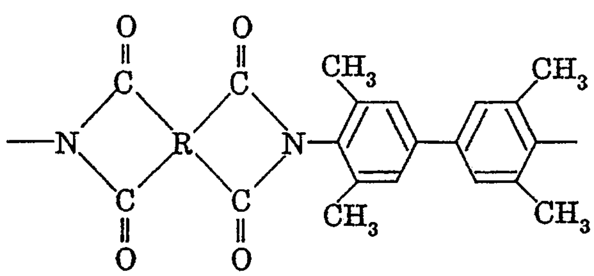

(IV)

wherein R represents a tetravalent aromatic group.

6. An aromatic polyimide separation membrane as defined in claim 1, wherein the gas permeability coefficient defined by the following formula:

$$P = \frac{\text{Gas permeation amount } (cm^3 \cdot STP) \text{ x membrane thickness } (cm)}{\text{Membrane area } (cm^2) \text{ x time(sec) x pressure difference } (cmHg)}$$

is not less than 1000 cB for hydrogen, not less than 100 cB for oxygen and not less than 1000 cB for carbon dioxide respectively.

7. A process for producing a polyimide separation membrane which comprises dissolving an aromatic polyimide consisting essentially of a repeating unit represented by the formula (I):

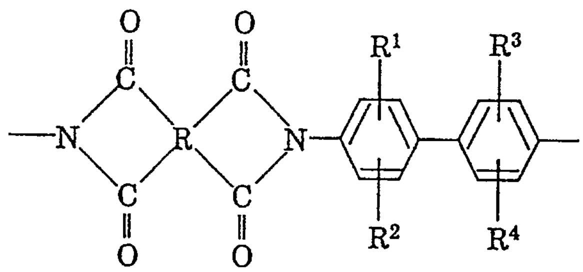

(I)

wherein R represents a tetravalent aromatic group and each of $R^1$ to $R^4$ represents an organic group with 1 to 12 carbon atoms,

in an organic solvent and then applying a heat treatment to a film formed from said solution at a temperature not lower than 200°C.

**8.** A process for producing an aromatic polyimide separation membrane as defined in claim 7, wherein each of $R^1$ to $R^4$ is an alkyl group with 1 to 12 carbon atoms.

**9.** A process for producing an aromatic polyimide separation membrane as defined in claim 7, wherein each of $R^1$ to $R^4$ is a lower alkyl group with 1 to 3 carbon atoms.

**10.** A process for producing an aromatic polyimide separation membrane as defined in claim 1, wherein each of $R^1$ to $R^4$ is a methyl group.

**11.** A process for producing an aromatic polyimide separation membrane as defined in claim 7, wherein the repeating unit is represented by the formula (IV):

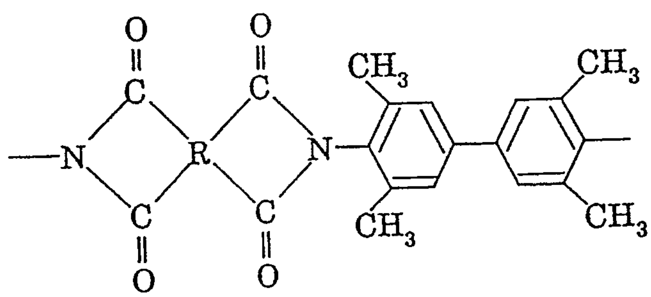

(IV)

wherein R represents a tetravalent aromatic group.

**12.** A process for producing an aromatic polyimide separation membrane as defined in claim 1, wherein the gas permeability coefficient as defined by the following formula:

$$P = \frac{\text{Gas permeation amount } (cm^3 \cdot STP) \times \text{membrane thickness (cm)}}{\text{Membrane area } (cm^2) \times \text{time(sec)} \times \text{pressure difference (cmHg)}}$$

is not less than 1000 cB for hydrogen, not less than 100 cB for oxygen and not less than 1000 cB for carbon dioxide respectively.

**13.** A method for gas separation which comprises bringing the aromatic polyimide separation membrane as defined in claim 1 into contact with a liquid mixture or gas mixture thereby selectively permeating permeable components contained in said liquid mixture or gas mixture.

**14.** A method for gas separation as defined in claim 13, wherein the permeable component is hydrogen, oxygen, nitrogen, water vapor, carbon monoxide, carbon dioxide or carbon disulfide.

# INTERNATIONAL SEARCH REPORT

International Application No PCT/JP89/01142

**I. CLASSIFICATION OF SUBJECT MATTER** (if several classification symbols apply, indicate all) [6]

According to International Patent Classification (IPC) or to both National Classification and IPC

Int. $Cl^5$ B01D71/64

**II. FIELDS SEARCHED**

Minimum Documentation Searched [7]

| Classification System | Classification Symbols |
|---|---|
| IPC | B01D71/64 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 63-90533 (Mitsubishi Chemical Industries Ltd.), 21 April 1988 (21. 04. 88), Claim and page 4, lower left column, line 12 to page 4, lower right column, line 10, (Family: none) | 1 - 14 |
| A | JP, A, 63-111921 (E.I. DuPont de Nemours and Co.), 17 May 1988 (17. 05. 88), Claim and EXample 2, & EP, A2, 265899 | 1 - 14 |
| A | JP, A, 62-244419 (E.I. DuPont de Nemours and Co.), 24 October 1987 (24. 10. 87), Claim and Example 2, & EP, A2, 241937 | 1 - 14 |
| A | JP, B2, 55-41802 (E.I. DuPont de Nemours and Co.), 27 October 1980 (27. 10. 80), Claim and Table I, & US, A, 3822202 & DE, A, 2336870 | 1 - 14 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| January 8, 1990 (08. 01. 90) | January 22, 1990 (22. 01. 90) |
| **International Searching Authority** | **Signature of Authorized Officer** |
| Japanese Patent Office | |